# EUROPÄISCHE PATENTSCHRIFT

(11) **EP 0 981 575 B1**
(45) Veröffentlichungstag und Bekanntmachung des Hinweises auf die Patenterteilung: **20.09.2000**
(21) Anmeldenummer: 97923889.6
(22) Anmeldetag: 14.05.1997
(51) Int. Cl.: C08J 9/16, C08F 12/04, C08F 12/08, C08J 9/00

(54) **VERFAHREN ZUR HERSTELLUNG GRAPHITPARTIKEL ENTHALTENDER EXPANDIERBARER STYROLPOLYMERISATE**
METHOD FOR PRODUCING EXPANDABLE STYRENE POLYMERS CONTAINING GRAPHITE PARTICLES
PROCEDE DE PRODUCTION DE POLYMERISATS DE STYRENE EXPANSIBLES CONTENANT DES PARTICULES DE GRAPHITE

(43) Veröffentlichungstag der Anmeldung: 01.03.2000
(73) Patentinhaber: BASF AKTIENGESELLSCHAFT, 67056 Ludwigshafen (DE)
(72) Erfinder: GLÜCK, Guiscard, D-55129 Mainz (DE); HAHN, Klaus, D-67281 Kirchheim (DE); BATSCHEIDER, Karl-Heinz, D-67112 Mutterstadt (DE); NAEGELE, Dieter, D-67550 Worms (DE); KAEMPFER, Knut, D-67065 Ludwigshafen (DE); HUSEMANN, Wolfram, D-67435 Neustadt (DE); HOHWILLER, Frieder, D-67098 Bad Dürkheim (DE)
(86) Internationale Anmeldenummer: EP9702457
(87) Internationale Veröffentlichungsnummer: WO9851734

(56) Entgegenhaltungen:
- DE-U- 29 616 361
- DE-U- 29 616 362
- GB-A- 1 588 314
- US-A- 3 117 943
- CHEMICAL ABSTRACTS, vol. 106, no. 8, 23.Februar 1987 Columbus, Ohio, US; abstract no. 50820, MISHIMA, SEIZO ET AL: "Carbon black-containing polystyrene beads" XP002051838 & JP 61 171 705 A (HITACHI CHEMICAL CO., LTD., JAPAN)
- CHEMICAL ABSTRACTS, vol. 105, no. 26, 29.Dezember 1986 Columbus, Ohio, US; abstract no. 227759, BRYK, M. T. ET AL: "Structure and properties of polystyrene prepared by polymerization in the presence of carbon fillers" XP002051839 & POLYM. COMPOS., PROC., MICROSYMP. MACROMOL., 28TH (1986), MEETING DATE 1985, 269-74. EDITOR(S): SEDLACEK, BLAHOSLAV. PUBLISHER: DE GRUYTER, BERLIN, FED. REP. GER. CODEN: 55FSA9, 1986,
- CHEMICAL ABSTRACTS, vol. 110, no. 22, 29.Mai 1989 Columbus, Ohio, US; abstract no. 193435, BRYK, M. T. ET AL: "Polystyrene synthesis in the presence of dispersed carbon fillers" XP002051841 & UKR. KHIM. ZH. (RUSS. ED.) (1988), 54(10), 1106-9 CODEN: UKZHAU;ISSN: 0041-6045, 1988,

## Beschreibung

Die Erfindung betrifft ein Verfahren zur Herstellung Graphitpartikel enthaltender expandierbarer Styrolpolymerisate in Partikelform.

Polystyrolpartikelschaumstoffe sind seit langer Zeit bekannt und haben sich auf vielen Gebieten bewahrt. Die Herstellung derartiger Schaumstoffe erfolgt durch Aufschaumen von mit Treibmitteln impragnierten Polystyrolpartikeln und nachfolgendes Verschweißen der so hergestellten Schaumpartikel zu Formkorpern. Ein wichtiges Einsatzgebiet ist die Wärmedammung im Bauwesen.

Die zur Warmedammung eingesetzten Schaumstoffplatten aus Polystyrolpartikelschaum haben zumeist Dichten von etwa 30 g/l, da bei diesen Dichten die Warmeleitfahigkeit des Polystyrolpartikelschaums ein Minimum aufweist. Aus Gründen der Materialeinsparung bzw. Raumeinsparung ware es wunschenswert, Schaumstoffplatten mit geringeren Dichten, insbesondere ≤ 15 g/l zur Warmeisolation einzusetzen. Die Herstellung derartiger Schaumstoffe ist technisch kein Problem. Schaumstoffplatten mit so geringer Dichte weisen jedoch eine drastisch verschlechterte Warmedammfahigkeit auf, so daß sie die Anforderungen der Wärmeleitklasse 035 (DIN 18 164, Teil 1) nicht erfüllen.

Nun ist es bekannt, die Warmeleitfahigkeit von Schaumstoffen durch Einbau von athermanen Materialien, wie Ruß, Metalloxiden, Metallpulver oder Farbstoffpigmenten, zu vermindern.

So werden in EP-A 372 343 Polystyrolschaumstoffe beschrieben, die 1 bis 25 Gew.-% Ruß enthalten. Der Ruß hat eine Partikelgroße von 10 bis 100 nm. Die dort beschriebenen Polyscyrolschaumstoffe werden vorwiegend nach dem Extrusionsverfahren hergestellt und weisen vorzugsweise eine Dichte von 32 - 40 g/l auf. Daneben ist die Herstellung von partikelförmigem, treibmittelhaltigem Polystyrol durch Einmischen eines Konzentrats von Ruß in Polystyrol zusammen mit Treibmitteln in eine Polystyrol-Schmelze, Extrudieren des Gemisches und Granulieren beschrieben. Dies ist eine recht aufwendige Arbeitsweise.

In WO 94/13721 werden ahnliche Schaume beschrieben, wobei die Größe der Rußpartikel > 150 nm ist.

In EP-A 620 246 werden Formkörper aus Polystyrol-Partikelschaum beschrieben, die ein partikelförmiges athermanes Material, insbesondere Ruß, daneben aber auch Graphit, enthalten. Die Dichte der Formkörper liegt unter 20 g/l. Bevorzugt erfolgt das Einarbeiten der Partikel in die Formkörper durch Oberflächenbeschichtung der vorgeschäumten Polystyrolperlen oder durch Einbetten in das noch nicht aufgeschäumte Polystyrol-Granulat. Diese Verteilung der Partikel an der Oberfläche der Polystyrolteilchen führt jedoch zu einer starken Verschlechterung der Verschweißung der vorgeschäumten Perlen und folglich zu Schaumstoffen geringer Güte, außerdem kann es zu einem Abrieb von der Oberfläche des Formkörpers kommen. Die Partikel sind in beiden Fällen jedenfalls nicht homogen im Innern der Polystyrolteilchen verteilt.

Der Erfindung lag die Aufgabe zugrunde, ein einfaches Verfahren zur Herstellung von Graphit enthaltenden expandierbaren Styrolpolymerisaten bereitzustellen, die zu Polystyrolpartikelschäumen mit niedriger Dichte und besonders niedriger Wärmeleitfähigkeit verarbeitet werden können, welche gute Verarbeitungseigenschaften und gute physikalische Eigenschaften aufweisen.

Die Aufgabe wurde gelöst durch Suspensionspolymerisation von Styrol in Gegenwart von Graphit.

Gegenstand der Erfindung ist ein Verfahren zur Herstellung von Graphitpartikel enthaltenden, expandierbaren Styrolpolymerisaten, bei dem man Styrol, gegebenenfalls zusammen mit 20 % seines Gewichts an Comonomeren, in wässriger Suspension in Gegenwart von Graphitpartikeln mit einer mittleren Teilchengröße von 1 bis 50 µm polymerisiert und vor, während oder nach der Polymerisation ein Treibmittel zusetzt.

Ein weiterer Gegenstand der Erfindung sind expandierbare Styrolpolymerisate, die 0,05 bis 25 Gew.-% Graphitpartikel mit einer mittleren Teilchengröße von 1 bis 5 µm in homogener Verteilung enthalten, und die in Form runder Perlen mit einem mittleren Durchmesser im Bereich von 0,2 bis 2 mm vorliegen.

In WO 95/10558 wird empfohlen, die Verträglichkeit von Ruß mit Polystyrol durch Beschichten des Rußes mit Weichmachern zu verbessern. Zur Herstellung entsprechender Schaumstoffe werden mehrere Verfahren angegeben, u.a. die Polymerisation von Styrol in Gegenwart von beschichtetem Thermalruß, Zusatz von Treibmitteln und Abkühlen der erhaltenen expandierbaren Partikel. Eine solche Massepolymerisation von Styrol ist jedoch nicht zu einem 100 %igen Umsatz durchzuführen, so daß die expandierbaren Partikel immer noch Restmonomeres enthalten. Überraschenderweise verläuft dagegen die Suspensionspolymerisation von Styrol in Gegenwart von Graphit unproblematisch und vollstandig.

Unter expandierbaren Styrolpolymerisaten werden Treibmittel enthaltende Styrolpolymerisate verstanden.

Die erfindungsgemaßen expandierbaren Styrolpolymerisate enthalten als Polymermatrix insbesondere Homopolystyrol oder Styrolcopolymerisate mit bis zu 20 Gew.-%, bezogen auf das Gewicht der Polymeren, an ethylenisch ungesättigten Comonomeren, insbesondere Alkylstyrole, Divinylbenzol, Acrylnitril oder α-Methylstyrol.

Bei der erfindungsgemaßen Suspensionspolymeriation konnen die ublichen Hilfsmittel, wie z. B. Peroxid-Initiatoren, Suspensionsstabilisatoren, Treibmittel, Kettenubertrager, Expandierhilfsmittel, Keimbildner und Weichmacher zugesetzt werden. Besonders bevorzugt ist der Zusatz von Flammschutzmitteln, vorzugsweise in Mengen von 0,6 bis 6 Gew.-% und von Flammschutzsynergisten in Mengen von 0,1 bis 1 Gew.-%, jeweils bezogen auf das resultierende Styrolpolymerisat. Bevorzugte Flammschutzmittel sind aliphatische, cycloaliphatische und aromatische Bromverbindungen, wie Hexabromcyclododecan, Pentabrommonochlorcyclohexan und Pentabromphencylallylether. Geeignete Synergisten sind C-C- oder O-O-labile organische Verbindungen, wie Dicumyl und Dicumylperoxid. Treibmittel werden in Mengen von 3 bis 10 Gew.-%, bezogen auf Styrolpolymerisat zugesetzt. Man kann sie vor, während oder nach der Polymerisation der Suspension zusetzen. Geeignete Treibmittel sind aliphatische Kohlenwasserstoffe mit 4 bis 6 Kohlenstoffatomen. Es ist vorteilhaft, als Suspensionsstabilisatoren anorganische Pickering-Dispergatoren, z.B. Magnesiumpyrophosphat oder Calciumphosphat einzusetzen.

Es hat sich gezeigt, daß es für die Stabilitat der Suspension günstig ist, wenn bei Beginn der Suspensionspolymerisation eine Losung von Polystyrol (bzw. einem entsprechenden Styrolcopolymerisat) in Styrol (bzw. der Mischung von Styrol mit Comonomeren) vorliegt. Bevorzugt geht man dabei von einer 0,5 bis 30, insbesondere 3 bis 20 Gew.-%igen Losung von Polystyrol in Styrol aus. Man kann dabei frisches Polystyrol in Monomeren auflosen, zweckmaßigerweise setzt man aber sogenannte Randfraktionen ein, die bei der Auftrennung des bei der Herstellung von expandierbarem Polystyrol anfallenden Perlspektrums als zu große oder zu kleine Perlen ausgesiebt werden. In der Praxis haben derartige nicht verwertbare Randfraktionen Durchmesser von größer als 2,0 mm bzw. kleiner als 0,2 mm. Auch Polystyrol-Recyclat und Schaumpolystyrol-Recyclat konnen eingesetzt werden. Eine andere Moglichkeit besteht darin, daß man Styrol in Substanz bis zu einem Umsatz von 0,5 bis 70 % vorpolymerisiert und das Vorpolymeriat zusammen mit den Graphitpartikeln in der wässrigen Phase suspendiert und auspolymerisiert.

Der eingesetzte Graphit hat eine mittlere Partikelgröße von 1-50 µm, insbesondere von 2,5-12 µm, ein Schüttgewicht von 100-500 g/l und eine spezifische Oberfläche von 5 - 20 m²/g. Es kann Naturgraphit oder gemahlener synthetischer Graphit eingesetzt werden.

Die Graphitpartikel werden bei der erfindungsgemäßen Suspensionspolymerisation bevorzugt in Mengen von 0,05 bis 25, insbesondere von 2 bis 8 Gew.-%, bezogen auf das resultierende Styrolpolymerisat, zugegeben. Sie werden entweder pulverförmig oder als granulatförmiges Konzentrat in Polystyrol eingesetzt. Es ist grundsätzlich auch möglich, die Graphitpartikel erst im Verlauf der Suspensionspolymerisation zuzusetzen, bevorzugt während der ersten Hälfte des Polymerisationszyklus. In diesem Falle erübrigt sich ein Zusatz von Polystyrol. Bei der Suspensionspolymerisation entstehen perlförmige, im wesentlichen runde Teilchen mit einem mittleren Durchmesser im Bereich von 0,2 bis 2 mm, in denen die Graphitpartikel homogen verteilt sind. Sie können mit den üblichen Beschichtungsmitteln, z. B. Metallstearaten, Glycerinestern und feinteiligen Silicaten beschichtet werden.

Die expandierbaren, Graphitpartikel enthaltenden Styrolpolymerisate können zu Polystyrolschaumstoffen mit Dichten von 5 - 35 g/l, bevorzugt von 8 bis 25 g/l und insbesondere von 10 - 15 g/l, verarbeitet werden.

Hierzu werden die expandierbaren Partikel vorgeschäumt. Dies geschieht zumeist durch Erwärmen der Partikel mit Wasserdampf in sogenannten Vorschäumern.

Die so vorgeschäumten Partikel werden danach zu Formkörpern verschweißt. Hierzu werden die vorgeschäumten Partikel in nicht gasdicht schließende Formen gebracht und mit Wasserdampf beaufschlagt. Nach Abkühlen können die Formteile entnommen werden.

Die aus den erfindungsgemäßen expandierbaren Styrolpolymerisaten hergestellten Schaumstoffe zeichnen sich durch eine hervorragende Wärmeisolierung aus. Dieser Effekt zeigt sich besonders deutlich bei niedrigen Dichten. So konnte durch Zusatz von 2 Gew.-% Graphit zu einem expandierbaren Styrolpolymerisat bei einer Dichte des Schaumstoffs von 10 g/l die Wärmeleitfähigkeit von 44 mW/m·K auf unter 35 mW/m·K gesenkt werden.

Durch die Moglichkeit, bei gleicher Warmeleitfahigkeit die Dichte der Styrolpolymerisate deutlich zu verringern, lassen sich Materialeinsparungen realisieren. Da im Vergleich mit herkommlichen expandierbaren Styrolpolymerisaten die gleiche Warmedämmung mit wesentlich geringeren Schüttdichten erreicht werden kann, konnen mit dem erfindungsgemaß hergestellten expandierbaren Polystyrolpartikeln dunnere Schaumstoffplatten eingesetzt werden, was eine Raumeinsparung ermoglicht.

Uberraschenderweise lassen sich die erfindungsgemäßen expandierbaren Styrolpolymerisate vollig problemlos zu Schaumstoffen geringer Dichte verarbeiten. Es kommt weder zu Treibmittelverlusten noch zu Störungen der Zellstruktur der Schaumstoffe, obwohl der Fachmann annehmen mußte, das Graphit als Keimbildner wirkt und zu einer unerwunschten Feinzelligkeit des Schaumes führen würde. Außerdem lassen sich durch Zusatzes von Flammschutzmitteln selbstverloschende Schaumstoffe herstellen, die den Brandtest B2 und in den meisten Fallen sogar B1 bestehen.

Die Erfindung soll an nachstehenden Beispielen naher erlautert werden. Die genannten Teile und Prozente beziehen sich auf das Gewicht.

### Beispiel 1

In 17,03 kg Styrol werden 2,55 kg Polystyrol (PS 158 K der BASF) gelöst und 196 g pulverformiges Graphit (Graphitwerk Kropfmühle KG, UF2 96/97), d.h. 1 % Graphit bezogen auf die summierte Styrol- und Polystyrolmenge, homogen suspendiert unter Beimischung von 59,6 g Dicumylperoxid und 20,4 g Dibenzoylperoxid. Die organische Phase wird in 19,5 l vollentsalztes Wasser in einem 50 l Ruhrkessel eingebracht. Die wäßrige Phase enthalt 69,8 g Natriumpyrophosphat und 129,5 g Magnesiumsulfat. Man dosiert 195,8 g Pentan zur Suspension, welche dann auf 80 °C erhitzt wird. Nach 140 Minuten wird 3,51 g Emulgator K 30/40 (Bayer AG) zugeben. Nach weiteren 30 Minuten wird 1175,1 g Pentan nachdosiert und bei 134 °C auspolymerisiert. Nach dem Abtrennen der waßrigen Phase erhalt man homogen dunkel eingefarbte Perlen mit einem mittleren Durchmesser von 0,82 mm. Die Perlen lassen sich mit Wasserdampf auf ein Litergewicht von 11,8 g nach 3 Minuten schäumen. Die Messung der Warmeleitzahl wurde bei 10 °C nach DIN 52 612 durchgeführt. Dabei ergab sich ein wert von 35 mW/m K.

### Beispiel 2

Beispiel 1 wurde wiederholt mit 2 % Graphit. Die Wärmeleitzahl der Schaumstoffperlen betrug bei einem Litergewicht von 10 g 34 mW/m·K.

### Beispiel 3

Beispiel 1 wurde wiederholt mit 4 % Graphit. Die Warmeleitfähigkeit betrug bei einem Litergewicht von 12 g 34 mW/m·K.

### Beispiel 4 (Vergleich)

Beispiel 1 wurde ohne Zusatz von Graphit durchgeführt. Die Wärmeleitzahl der Schaumstoffperlen betrug bei einem Litergewicht von 10 g 44 mW/m·K.

### Beispiel 5

Beispiel 2 wurde wiederholt, wobei als Flammschutzmittelsystem 127 g Hexabromcyclododecan und 85 g Dicumyl zugesetzt wurden. Die Polymerisation wurde bei 125°C durchgeführt. Es ergab sich eine Warmeleitzahl von 34 mW/m·K. Die Brandschutzklasse B 2 wurde erreicht.

### Beispiel 6

In einem druckfesten Ruhrkessel wurde eine Mischung aus 150 Teilen vollentsalztem Wasser, 0,1 Teilen Natriumpyrophosphat, 100 Teilen Styrol, 0,45 Teilen Benzoylperoxid, 0,15 Teilen tert.-Butylperbenzoat sowie 5 Teilen Kropfmuhl-Pulvergraphit UFT 99.5, 2 Teilen Hexabromcyclododecan (HBCD) und 0,4 Teilen Dicumylperoxid unter Rühren auf 90°C erhitzt.

Nach 2 Stunden bei 90°C wurden 4 Teile einer 10 %igen waßrigen Lösung von Polyvinylpyrrolidon zugegeben.

Dann wurde weitere 2 Stunden bei 90°C geruhrt und 7 Teile einer Mischung aus 80 % n-Pentan und 20 % iso-Pentan zugegeben. Anschließend wurde 2 Stunden bei 110°C und schließlich 2 Stunden bei 140°C gerührt.

Die erhaltenen expandierbaren Polystyrolperlen wurden mit vollentsalztem Wasser gewaschen, auf 0,7 - 1,0 mm ausgesiebt und anschließend mit Warmluft getrocknet.

Durch Einwirkung von strömendem Wasserdampf wurden die Perlen vorgeschaumt und nach eintagiger Lagerung durch weitere Behandlung mit Wasserdampf in einer geschlossenen Form zu Schaumstoffblocken einer Dichte von 15 g/l verschweißt.

Die Messung der Warmeleitzahlen wurde bei 10°C nach DIN 52612 durchgefuhrt. Es ergab sich ein Wert von 34 mWm·K.

### Beispiel 7

In 16,6 kg Styrol werden 0,498 kg an EPS-Randfraktion gelöst und 16,6 g pulverformiges Graphit (Graphitwerk Kropfmuhl KG, UF2 96/97), d.h. 0,1 % Graphit, bezogen auf die summierte Styrol- und EPS-Menge, homogen suspendiert unter Beimischung von 83,0 g Dicumylperoxid und 4,15 g Dibenzoylperoxid, sowie 112,033 g Hexabromcyclododecan (HBCD). Die organische Phase wird in 19,3 l vollentsalztes Wasser in einem 50 l Ruhrkessel eingebracht. Die waßrige Phase enthalt 46,127 g Natriumpyrophosphat und 86,348 g Magnesiumsulfat (Bittersalz). Die Suspension wird binnen 140 Minuten auf 80°C erhitzt. Dann werden 2,32 g Emulgator K 30/40 (Bayer AG) zugegeben. Nach weiteren 40 Minuten werden 1330 g Pentan zudosiert und bei 126°C auspolymerisiert.

Nach dem Abtrennen der wäßrigen Phase erhält man homogen gräulich eingefärbte Perlen mit einem mittleren Durchmesser von 1,18 mm. Die Perlen erreichen nach zweimaligem Vorschaumen mit Wasserdampf ein Litergewicht von 10,0 g. Der Innenwassergehalt ist < 1,5 % und der Reststyrolgehalt < 1000 ppm. Die Warmeleitfähigkeit bei einem Schuttgewicht von 10 g/l ist um 2 mW/m K gegenüber dem Produkt ohne einpolymerisiertem Graphit herabgesenkt.

### Vergleichsbeispiel 8

### Oberflachenbeschichtung mit Graphit

In einem Mischaggregat wurden vorgeschaumte EPS-Perlen mit 2,0 % Graphit versetzt. Es zeigte sich eine unvollständige Beschichtung und ungleichmaßige Verteilung des Graphits auf der Perlenoberfläche. Bei der Weiterverarbeitung wurde ein starker Abrieb des Graphits von der Perlenoberfläche beobachtet. Durch den Einsatz von Bindemitteln (Glyzerinstearat, Weißöl) konnte keine qualitative Verbesserung der Beschichtungsergebnisse erreicht werden. Die Verschweißung der Formteile war unbefriedigend.

## Patentansprüche

1. Verfahren zur Herstellung von Graphitpartikel enthaltenden, expandierbaren Styrolpolmerisaten, dadurch gekennzeichnet, daß man Styrol, gegebenenfalls zusammen mit 20 % seines Gewichts an Comonomeren, in wässriger Suspension in Gegenwart von Graphitpartikeln mit einer mittleren Teilchengröße von 1 bis 50 um unter Zusatz von Peroxid- Initiatoren polymerisiert und vor, während oder nach der Polymerisation ein Treibmittel zusetzt.

2. Verfahren nach Anspruch 1. dadurch gekennzeichnet, daß man die Polymerisation in Gegenwart von 0,05 bis 25 Gew.-% Graphit, bezogen auf Styrolpolymerisat, durchführt.

3. Verfahren nach Anspruch 1, dadurch gekennzeichnet, daß man die Suspensionspolymerisation in Gegenwart einer organischen Bromverbindung als Flammschutzmittel durchführt.

4. Verfahren nach Anspruch 1, dadurch gekennzeichnet, daß bei der Suspensionspolymerisation eine Lösung von Polystyrol in Styrol eingesetzt wird.

5. Verfahren nach Anspruch 4, dadurch gekennzeichnet, daß eine 0,5 bis 30, vorzugsweise 5 bis 20 Gew.-%ige Lösung von Polystyrol in Styrol eingesetzt wird.

6. Verfahren nach Anspruch 4, dadurch gekennzeichnet, daß als Polystyrol ausgesiebte Randfraktionen von expandierbarem Polystyrol eingesetzt werden.

7. Verfahren nach Anspruch 1, dadurch gekennzeichnet, daß Styrol bis zu einem Umsatz von 0,5 bis 70 % vorpolymerisiert wird, und das Vorpolymerisat zusammen mit den Graphitpartikeln in die wässrige Phase überführt wird.

8. Teilchenförmige expandierbare Styrolpolymerisate in Form runder Perlen mit einem mittleren Durchmesser im Bereich von 0,2 bis 2 mm, die 0,05 bis 25 Gew.-% Graphitpartikel enthalten, dadurch gekennzeichnet, daß die Graphitpartikel homogen im Innern der Styrolpolymerisat-Teilchen verteilt sind, und daß die mittlere Partikelgröße des Graphits 1 bis 50 µm beträgt.

9. Verwendung der teilchenförmigen expandierbaren Styrolpolymerisate nach Anspruch 8 zur Herstellung von Schaumstoffen mit einer Dichte von 5 bis 35 g/l.

## Claims

1. A process for preparing expandable styrene polymers containing graphite particles, which comprises polymerizing styrene, if desired together with 20% of its weight of comonomers, in aqueous suspension in the presence of graphite particles having a mean particle size of from 1 to 50 µm with addition of peroxide initiators and adding a blowing agent before, during or after the polymerization.

2. A process as claimed in claim 1, wherein the polymerization is carried out in the presence of from 0.05 to 25% by weight of graphite, based on styrene polymer.

3. A process as claimed in claim 1, wherein the suspension polymerization is carried out in the presence of an organic bromine compound as flame retardant.

4. A process as claimed in claim 1, wherein a solution of polystyrene in styrene is used in the suspension polymerization.

5. A process as claimed in claim 4, wherein a 0.5 to 30% strength by weight, preferably 5 - 20% strength by weight, solution of polystyrene in styrene is used.

6. A process as claimed in claim 4, wherein the polystyrene used is oversize and/or undersize fractions of expandable polystyrene.

7. A process as claimed in claim 1, wherein styrene is prepolymerized to a conversion of from 0.5 to 70% and the prepolymer together with the graphite particles is transferred to the aqueous phase.

8. A particulate expandable styrene polymer in the form of round beads having a mean diameter in the range from 0.2 to 2 mm and containing from 0.05 to 25% by weight of graphite particles, wherein the graphite particles are homogeneously distributed inside the styrene polymer particles and the mean particle size of the graphite is from 1 to 50 µm.

9. The use of a particulate expandable styrene polymer as claimed in claim 8 for producing foams having a density of from 5 to 35 g/l.

## Revendications

1. Procédé pour la préparation de polymères de styrène expansibles contenant des particules de graphite, caractérisé en ce qu'on polymérise du styrène, le cas échéant de manière conjointe avec des comonomères à concurrence de 20 % de son poids, en suspension aqueuse en présence de particules de graphite possédant une granulométrie moyenne de 1 à 50 µm, tout en ajoutant des initiateurs de type peroxydes et on ajoute avant, pendant ou après la polymérisation, un agent moussant.

2. Procédé selon la revendication 1, caractérisé en ce qu'on effectue la polymérisation en présence de 0,05 à 25 % en poids de graphite, rapportés au polymère de styrène.

3. Procédé selon la revendication 1, caractérisé en ce qu'on effectue la polymérisation en suspension en présence d'un composé de brome organique à titre d'agent retardateur des flammes.

4. Procédé selon la revendication 1, caractérisé en ce que, au cours de la polymérisation, on met en oeuvre une solution de polystyrène dans du styrène.

5. Procédé selon la revendication 4, caractérisé en ce qu'on met en oeuvre une solution de polystyrène dans du styrène à concurrence de 0,5 à 30, de préférence de 5 à 20 % en poids.

6. Procédé selon la revendication 4, caractérisé en ce qu'on met en oeuvre, à titre de polystyrène, des fractions marginales de polystyrène expansible écartées par tamisage.

7. Procédé selon la revendication 1, caractérisé en ce qu'on soumet du styrène à une prépolymérisation jusqu'à ce qu'on obtienne une conversion de 0,5 à 70 % en poids et on transfère le prépolymère de manière conjointe avec les particules de graphite dans la phase aqueuse.

8. Polymères expansibles particulaires de styrène sous forme de perles rondes possédant un diamètre moyen de 0,2 à 2 mm, qui contiennent des particules de graphite à concurrence de 0,05 à 25 % en poids, caractérisés en ce que les particules de graphite sont réparties de manière homogène à l'intérieur des particules de polymère de styrène, et en ce que la granulométrie moyenne du graphite s'élève de 1 à 50 µm.

9. Utilisation des polymères expansibles particulaires de styrène selon la revendication 8 pour la préparation de mousses possédant une densité de 5 à 35 g/l.
